# EUROPÄISCHE PATENTSCHRIFT

(11) **EP 3 346 103 B1**
(45) Veröffentlichungstag und Bekanntmachung des Hinweises auf die Patenterteilung: **22.05.2019**
(21) Anmeldenummer: 17207004.7
(22) Anmeldetag: 13.12.2017
(51) Int. Cl.: F01N 3/10, F01N 3/20, F01N 3/28, F01N 13/08, F01N 3/021, F01N 13/00, F01N 5/02, F01N 13/14, F01N 3/023, F01N 3/24

(54) **ABGASANLAGE**
EXHAUST GAS SYSTEM
INSTALLATION DE GAZ D'ÉCHAPPEMENT

(30) Priorität: 05.01.2017 DE 102017100167; 01.02.2017 DE 102017101923
(43) Veröffentlichungstag der Anmeldung: 11.07.2018
(73) Patentinhaber: Eberspächer Exhaust Technology GmbH & Co. KG, 66539 Neunkirchen (DE)
(72) Erfinder: Neumann, Felix, 73773 Aichwald (DE); Kauderer, Alexander, 73329 Kuchen (DE); Datz, Wolfgang, 72076 Tübingen (DE); Weinmann, Philip, 73730 Esslingen (DE); Krammer, Simon, 71364 Winnenden (DE); Sauer, Andreas, 73054 Eislingen (DE)
(74) Vertreter: Ruttensperger Lachnit Trossin Gomoll

(56) Entgegenhaltungen:
- EP-A1- 2 557 288
- WO-A2-2012/145298
- US-A- 3 972 685
- US-A1- 2012 014 843

## Beschreibung

Die vorliegende Erfindung betrifft eine Abgasanlage für eine Brennkraftmaschine, die vorzugsweise Anwendung finden kann bei in Nutzkraftfahrzeugen oder Personenkraftfahrzeugen als Antriebsaggregate genutzten DieselBrennkraftmaschinen.

In derartigen Abgasanlagen werden verschiedene Abgasnachbehandlungseinheiten, wie zum Beispiel Katalysatoranordnungen oder Partikelfilter, eingesetzt, um den Schadstoffausstoß zu verringern. Vor allem Katalysatoranordnungen müssen für eine effiziente Umsetzung der in den Verbrennungsabgasen transportierten Schadstoffe eine Temperatur im Bereich von mindestens 200°C bis 250°C aufweisen. Eine derart hohe Temperatur gewährleistet ferner zuverlässig die Verdampfung einer in den Abgasstrom als Reaktionsmittel für eine selektive katalytische Reduktion eingespritzten Harnstofflösung. Da vor allem am Beginn des Betriebs einer Brennkraftmaschine die zuvor nicht von Verbrennungsabgasen durchströmten bzw. umströmten Katalysatoranordnungen eine deutlich unter einer derartigen Aktivierungstemperatur liegende Temperatur aufweisen werden, wird bis zum Erreichen der erforderlichen Temperaturen im Bereich der Katalysatoranordnungen der Abgasstrom im Wesentlichen unbehandelt und mit hohem Schadstoffanteil ausgestoßen. Zunehmend strenger werdende gesetzliche Anforderungen verkürzen die Zeitdauer, während welcher ein derartig hoher Schadstoffanteil zugelassen ist.

Eine Abgasanlage gemäß dem Oberbegriff des Anspruchs 1 ist aus der EP 2 557 288 A1 bekannt. Den Abgasnachbehandlungskanalbereich dieser bekannten Abgasanlage durchströmendes Abgas kann, abhängig vom Stellzustand einer Abschließeinheit, entweder über diese Abschließeinheit weiter geleitet werden oder in ein außen am Abgasnachbehandlungskanalbereich vorbei führendes Isolationsvolumen geleitet werden, aus welchem dieses Isolationsvolumen durchströmendes Abgas zu einem Wärmetauscher hin austritt.

Die US 3 972 685 A offenbart eine Abgasanlage, bei welcher eine Brennkraftmaschine verlassendes Abgas durch einen drei radial gestaffelte Abschnitte umfassenden Abgasnachbehandlungskanalbereich geleitet wird. In jedem der Abschnitte ist eine Abgasbehandlungseinheit angeordnet. Abhängig vom Stellzustand zweier Abschließeinheiten werden die drei Abschnitte des Abgasnachbehandlungskanalbereichs nacheinander, also seriell durchströmt, so dass der gesamte Abgasstrom durch jeden der Abschnitte hindurch geleitet wird und in jeder der in den Abschnitten angeordneten Abgasbehandlungseinheiten behandelt wird, oder werden parallel durchströmt, so dass durch jeden der Abschnitte nur ein Teil des gesamten Abgasstroms hindurch geleitet und in der dort angeordneten Abgasbehandlungseinheit behandelt wird.

Die WO 2012/145298 A2 offenbart eine Abgasanlage bei welcher in einem Abgasnachbehandlungskanalbereich mehrere in Strömungsrichtung linear aufeinanderfolgend angeordnete Abgasbehandlungseinheiten vorgesehen sind. Der Abgasnachbehandlungskanalbereich ist außen von einem Isolationsvolumen umgeben. Von einer Brennkraftmaschine ausgestoßenes Abgas durchströmt zunächst das Isolationsvolumen und wird dann in den Abgasnachbehandlungskanalbereich eingeleitet.

Die US 2012/0014843 A1 offenbart eine Abgasanlage, bei welcher in einen Abgasnachbehandlungskanalbereich eingeleitetes Abgas zunächst ein außen am Abgasnachbehandlungskanalbereich vorbei führendes Isolationsvolumen durchströmt und nach dem Austritt aus dem Abgasnachbehandlungskanalbereich ein weiteres am Abgasnachbehandlungskanalbereich vorbei führendes Isolationsvolumen durchströmt.

Es ist die Aufgabe der vorliegenden Erfindung, eine Abgasanlage für eine Brennkraftmaschine, insbesondere Diesel-Brennkraftmaschine, vorzusehen, mit welcher bei baulich einfacher Ausgestaltung der Schadstoffausstoß verringert werden kann.

Gemäß der vorliegenden Erfindung wird diese Aufgabe gelöst durch eine Abgasanlage für eine Brennkraftmaschine, insbesondere Diesel-Brennkraftmaschine, gemäß Anspruch 1. Diese umfasst einen Abgasströmungskanal, wobei in einem Abgasnachbehandlungskanalbereich des Abgasströmungskanals wenigstens eine Abgasnachbehandlungseinheit vorgesehen ist, wobei der Abgasnachbehandlungskanalbereich des Abgasströmungskanals wenigstens bereichsweise in einem von aus dem Abgasnachbehandlungskanalbereich austretendem Abgas durchströmbaren Isolationsvolumen verläuft.

Die erfindungsgemäß aufgebaute Abgasanlage nutzt die im Abgasstrom auch nach dem Durchströmen des Abgasnachbehandlungskanalbereichs noch transportierte Wärme zum Erreichen einer verbesserten thermischen Isolation und somit zum schnelleren Erwärmen desjenigen Systembereichs, in welchem eine Abgasnachbehandlung erfolgen soll. Dies führt insbesondere in einer Betriebsstartphase zu einer deutlich verkürzten Zeitdauer bis zum Erreichen von Temperaturen, welche eine effiziente Abgasnachbehandlung gewährleisten. Auch während des Betriebs einer Brennkraftmaschine kann, sofern dies erforderlich ist, die in den Abgasen nach Durchströmen des Abgasnachbehandlungskanalbereichs noch transportierte Restwärme genutzt werden, um diejenigen Systembereiche der Abgasanlage, welche zur effizienten Abgasbehandlung eine vergleichsweise hohe Temperatur benötigen, gegen übermäßige Abkühlung zu schützen.

Für eine effiziente Ausnutzung der in den von einer Brennkraftmaschine ausgestoßenen Abgasen transportierten Restwärme wird vorgeschlagen, dass im Wesentlichen der ganze Abgasnachbehandlungskanalbereich des Abgasströmungskanals in dem Isolationsvolumen verläuft.

Um die in den Abgasen transportierte Wärme wahlweise zur Erwärmung von Abgasnachbehandlungseinheiten nutzen zu können, oder, sofern dies nicht erforderlich ist, zur Umgebung hin ableiten zu können, ist der Abgasnachbehandlungskanalbereich zu einem Abgaseintrittsbereich des Isolationsvolumens und einem Abgasaustrittskanalbereich des Abgasströmungskanals offen.

Dabei wird ein Aufteilen des Abgasstroms dadurch realisiert, dass in Zuordnung zu dem Abgasaustrittskanalbereich eine zum Abschließen und Freigeben des Abgasaustrittkanalbereichs verstellbare Abschließeinheit vorgesehen ist. Diese kann eine im Abgasaustrittkanalbereich zwischen einer diesen gegen Durchströmung im Wesentlichen abschließenden Abschließstellung und einer diesen zur Durchströmung freigebenden Freigabestellung verstellbar angeordnete Abschließklappe umfassen. Dabei kann die Abschließklappe vorzugsweise auch in allen Zwischenpositionen zwischen der Abschließstellung der Freigabestellung positioniert werden.

Zum Abgeben der die Abgasanlage durchströmenden Abgase zur Umgebung hin oder zu in Strömungsrichtung folgenden Systembereichen, wie zum Beispiel einem Schalldämpfer, unabhängig davon, ob die in den Abgasen transportierte Restwärme genutzt wurde oder nicht, sind das Isolationsvolumen und der Abgasaustrittskanalbereich zu einem Abgasableitkanalbereich des Abgasströmungskanals offen.

Für eine effiziente Abgasnachbehandlung kann im Abgasnachbehandlungskanalbereich eine Oxidationskatalysatoranordnung oder/und eine Partikelfilteranordnung oder/und eine SCR-(Selektive Katalytische Reduktion)-Katalysatoranordnung oder/und eine Ammoniak-Sperrkatalysatoranordnung vorgesehen sein.

Um bei Vorsehen einer Oxidationskatalysatoranordnung und einer SCR-Katalysatoranordnung als Abgasnachbehandlungseinheiten die im Bereich der SCR-Katalysatoranordnung durchzuführende selektive katalytische Reduktion erreichen zu können, wird vorgeschlagen, dass die SCR-Katalysatoranordnung stromabwärts der Oxidationskatalysatoranordnung angeordnet ist, und dass stromabwärts der Oxidationskatalysatoranordnung und stromaufwärts der SCR-Katalysatoranordnung eine Reaktionsmitteleingabeanordnung angeordnet ist.

Da in Betriebszuständen, in welchen eine zusätzliche Erwärmung einer oder mehrerer Abgasnachbehandlungseinheiten nicht erforderlich ist, der Strömungswiderstand der Abgasanlage möglichst klein gehalten werden soll, wird zur Bereitstellung von Information darüber, dass bzw. ob ein derartiger Betriebszustand vorliegt, vorgeschlagen, dass in Zuordnung zu wenigstens einer Abgasnachbehandlungseinheit ein Temperatursensor vorgesehen ist.

Die von einem derartigen Temperatursensor gelieferte Information kann bei einer erfindungsgemäßen Abgasanlage vorteilhafterweise dadurch genutzt werden, dass in Zuordnung zu der Abschließeinheit ein unter der Ansteuerung einer Ansteuereinheit stehender Stellantrieb vorgesehen ist, wobei die Ansteuereinheit dazu ausgebildet ist, den Stellantrieb beruhend auf dem Ausgangssignal wenigstens eines einer Abgasnachbehandlungseinheit zugeordneten Temperatursensors anzusteuern.

Eine kompakte Bauart der erfindungsgemäßen Abgasanlage kann dadurch erreicht werden, dass der Abgasnachbehandlungskanalbereich des Abgasströmungskanals einen ersten Kanalabschnitt, einen zweiten Kanalabschnitt und einen den ersten Kanalabschnitt mit dem zweiten Kanalabschnitt verbindenden dritten Kanalabschnitt umfasst, wobei im ersten Kanalabschnitt und im zweiten Kanalabschnitt jeweils wenigstens eine Abgasnachbehandlungseinheit vorgesehen ist und eine Abgashauptströmungsrichtung im ersten Kanalabschnitt im Wesentlichen gleich gerichtet zu einer Abgashauptströmungsrichtung im zweiten Kanalabschnitt ist und eine Abgashauptströmungsrichtung im dritten Kanalabschnitt im Wesentlichen entgegengesetzt zur Abgashauptströmungsrichtung im ersten Kanalabschnitt und im zweiten Kanalabschnitt ist. Dabei sind vorzugsweise der erste Kanalabschnitt und der zweite Kanalabschnitt einander in der Abgashauptströmungsrichtung im ersten Kanalabschnitt und im zweiten Kanalabschnitt vorzugsweise im Wesentlichen vollständig überlappend angeordnet.

Die vorliegende Erfindung wird nachfolgend mit Bezug auf die beiliegenden Figuren detailliert beschrieben. Es zeigt:
- Fig. 1: eine prinzipartige Darstellung einer Abgasanlage in einem Betriebszustand, in welchem die Abgasanlage durchströmende Abgase zur verbesserten Isolation von Abgasnachbehandlungseinheiten genutzt werden;
- Fig. 2: eine der Fig. 1 entsprechende Darstellung, wobei die Abgasanlage in einem Betriebszustand ist, in welchem die Abgasanlage durchströmende Abgase nicht zur Isolation von Abgasnachbehandlungseinheiten genutzt werden.

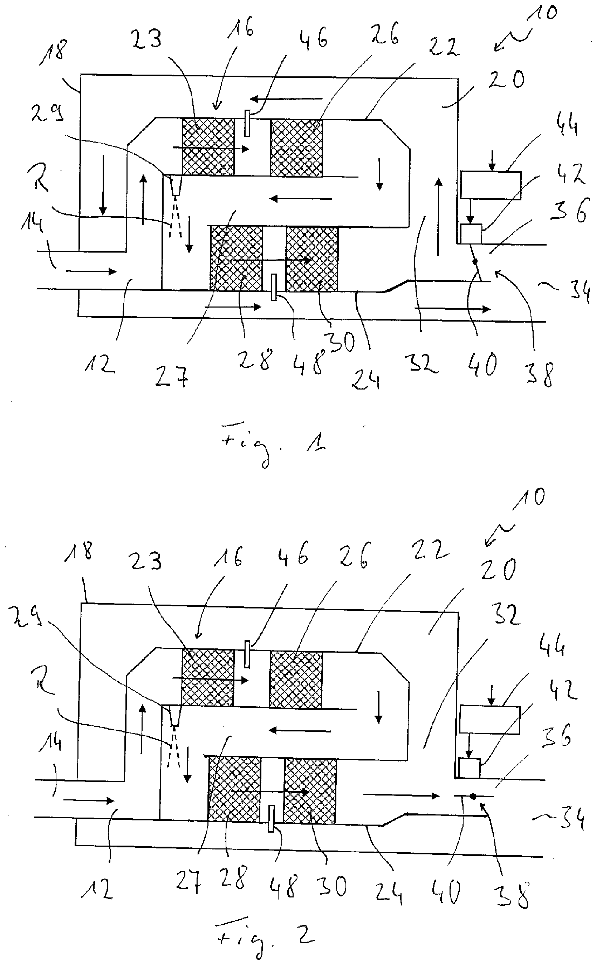

In Fig. 1 ist eine beispielsweise in Verbindung mit einer Diesel-Brennkraftmaschine einzusetzende Abgasanlage allgemein mit 10 bezeichnet. Die in Fig. 1 in prinzipartiger Darstellung gezeigte Abgasanlage 10 umfasst einen mit einem oder mehreren Rohren oder Rohrabschnitten aufgebauten Abgasströmungskanal 12, der mit einem Abgaseinleitkanalbereich 14 zu einem allgemein mit 16 bezeichneten Abgasnachbehandlungskanalbereich führt. Der Abgasnachbehandlungskanalbereich 16 ist in einem beispielsweise in einem Gehäuse 18 gebildeten Isolationsvolumen 20 angeordnet.

Der Abgasnachbehandlungskanalbereich 16 umfasst einen ersten Kanalabschnitt 22, in welchem in Strömungsrichtung aufeinander folgend eine Diesel-Oxidationskatalysatoranordnung 23 und eine Diesel-Partikelfilteranordnung 26 angeordnet sind. In einem stromabwärts des ersten Kanalabschnitts 22 positionierten zweiten Kanalabschnitt 24, welcher über einen dritten Kanalabschnitt 27 mit dem ersten Kanalabschnitt 22 verbunden ist, sind in Strömungsrichtung aufeinander folgen eine SCR-Katalysatoranordnung 28 und eine Ammoniak-Sperrkatalysatoranordnung 30 angeordnet. Um an der SCR-Katalysatoranordnung 28 die selektive katalytische Reduktion durchführen zu können, ist stromaufwärts davon und vorzugsweise stromabwärts bezüglich der Diesel-Oxidationskatalysatoranordnung 23 bzw. der Diesel-Partikelfilteranordnung 26 eine Reaktionsmitteleingabeanordnung 29, allgemein auch als Injektor bezeichnet, vorgesehen. Diese kann beispielsweise im dritten Kanalabschnitt 27 positioniert sein, um in das dort strömende Abgas Reaktionsmittel R, beispielsweise eine Harnstoff/Wasser-Lösung, einzuspritzen und mit diesem zu durchmischen.

Der mit der Diesel-Oxidationskatalysatoranordnung 23, der Diesel-Partikelfilteranordnung 26, der SCR-Katalysatoranordnung 28 und der Ammoniak-Sperrkatalysatoranordnung 30 als Abgasnachbehandlungseinheiten aufgebaute Abgasnachbehandlungskanalbereich 16 ist mit seinen drei Kanalabschnitten 22, 24, 27 so angeordnet, dass diese grundsätzlich zueinander parallel liegen, und dass eine Abgashauptströmungsrichtung im ersten Kanalabschnitt 22 und im zweiten Kanalabschnitt 24 zueinander im Wesentlichen parallel und gleichgerichtet sind, während eine Abgashauptströmungsrichtung im dritten Kanalabschnitt 27 zu der Abgashauptströmungsrichtung im ersten Kanalabschnitt 22 bzw. im zweiten Kanalabschnitt 24 im Wesentlichen entgegengesetzt gerichtet ist. Somit wird eine mäanderartige Ausgestaltung des Abgasnachbehandlungskanalbereichs 16 insbesondere in denjenigen Bereichen realisiert, in welchen Abgasnachbehandlungseinheiten angeordnet sind, was zu einer sehr kompakten Bauart beiträgt, die insbesondere in einem entsprechend kompakt gestalteten Gehäuse 18 so aufgenommen werden kann, dass der Abgasnachbehandlungskanalbereich 16 durch das Isolationsvolumen durchströmendes Abgas zumindest bereichsweise, vorzugsweise im Wesentlichen vollständig umströmt werden kann. Hierzu können zusätzliche in Fig. 1 nicht dargestellte Strömungsleitelemente vorgesehen sein, welche dafür sorgen, dass das den Abgasnachbehandlungskanalbereich verlassende und in einem Abgaseintrittsbereich 32 in das Isolationsvolumen 20 eintretende Abgas entlang der gesamten Außenoberfläche des Abgasnachbehandlungskanalbereich 16 geführt wird, bevor es das Isolationsvolumen zu einem Abgasableitkanalbereich 34 hin verlässt. Es ist darauf hinzuweisen, dass auch andere räumliche Anordnungen der die verschiedenen Abgasnachbehandlungseinheiten enthaltenden Kanalabschnitte, beispielsweise im Wesentlichen linear aufeinander folgend, vorgesehen sein können.

In Zuordnung zu einem den Abgasnachbehandlungskanalbereich 16 mit dem Abgasableitkanalbereich 34 verbindenden Abgasaustrittskanalbereich 36 ist eine allgemein mit 38 bezeichnete Abschließeinheit 38 vorgesehen. Diese umfasst eine in dem Abgasaustrittskanalbereich 36 positionierte Abschließklappe 40, welche zwischen einer in Fig. 1 dargestellten Abschließstellung und einer in Fig. 2 dargestellten Freigabestellung verstellbar ist. Hierzu ist der Abschließklappe 40 ein beispielsweise elektromotorisch arbeitender Stellantrieb 42 zugeordnet, der, unter der Ansteuerung einer Ansteuereinheit 44 stehend, die Abschließklappe 40 zwischen der Abschließstellung der Fig. 1 und der Freigabestellung der Fig. 2 verstellt und auch in Zwischenstellungen zwischen diesen beiden Stellungen bringen und halten kann.

Die Abgasanlage 10 umfasst ferner mehrere Temperatursensoren, welche die Temperatur des den Abgasströmungskanal 12 durchströmenden Abgases an verschiedenen Positionen, ggf. auch die Temperatur verschiedener der Abgasnachbehandlungseinheiten erfassen können. So ist beispielsweise stromabwärts der Diesel-Oxidationskatalysatoranordnung 23 ein Temperatursensor 46 vorgesehen. Stromabwärts der SCR-Katalysatoranordnung ist ein Temperatursensor 48 vorgesehen. Die Temperatursensoren 46, 48 und ggf. noch weitere an anderen Positionen vorgesehene Temperatursensoren speisen ihre die von diesen jeweils erfasste Temperatur repräsentierenden Signale in die Ansteuereinheit 44 ein, welche, beruhend auf diesen Signalen der Stellantrieb 42 zum Verstellen bzw. Halten der Abschließklappe 40 in einer vorgegebenen Stellung ansteuert. Auch andere den Betrieb charakterisierende Größen, wie zum Beispiel der Druck bzw. die Abgaszusammensetzung, können bei der Ansteuerung der Abschließklappe 40 berücksichtigt werden.

Mit der erfindungsgemäß aufgebauten Abgasanlage 10 kann beispielsweise dann, wenn der Betrieb einer Brennkraftmaschine aufgenommen wird und die Abgasanlage 10 selbst, ebenso wie die die Brennkraftmaschine verlassenden Abgase, noch eine vergleichsweise niedrige Temperatur aufweist, durch das Abschließen des Abgasaustrittskanalbereichs 36 vermittels der Abschließklappe 40 dafür gesorgt werden, dass die die Brennkraftmaschine verlassenden Verbrennungsabgase nach dem Durchströmen des Abgasnachbehandlungskanalbereichs 16 nicht direkt in den Abgasableitkanalbereich 34 gelangen können. Vielmehr werden die den Abgasnachbehandlungskanalbereich 16 verlassenden und noch eine Restwärme transportierenden Abgase durch die in ihrer Abschließstellung positionierte Abschließklappe 40 in das Isolationsvolumen 20 geleitet, wo sie den Abgasnachbehandlungskanalbereich 16 an seiner Außenseite umströmen und dabei zu einer verbesserten thermischen Isolation insbesondere der darin vorgesehenen Abgasnachbehandlungseinheiten beitragen, um Wärmeverluste nach außen zu vermeiden und gegebenenfalls beispielsweise bei zunächst noch nicht von Abgasen erwärmten Abgasnachbehandlungseinheiten diese auch von außen her zu erwärmen. Erst nach dem Durchströmen des Isolationsvolumens 20 treten die deutlich weiter abgekühlten Abgase zum Abgasableitkanalbereich 34 hin aus dem Isolationsvolumen 20 aus.

Dieser Zustand kann so lange beibehalten werden bzw. dann eingestellt werden, so lange vermittels eines oder mehrerer Temperatursensoren 46, 48 erfasst wird, dass der Abgasnachbehandlungskanalbereich 16 und insbesondere eine oder mehrere der darin vorgesehenen Abgasnachbehandlungseinheiten noch eine derart niedrige Temperatur aufweisen, dass eine effiziente Abgasnachbehandlung noch nicht gewährleistet ist. Erreicht die Temperatur im Bereich des Abgasnachbehandlungskanalbereichs 16, insbesondere im Bereich der verschiedenen Katalysatoranordnungen, ein Temperaturniveau, das im Bereich von 200°C bis 250°C bzw. darüber liegt und somit eine effiziente Durchführung katalytischer Reaktionen in den verschiedenen Katalysatoranordnungen gewährleistet, kann die Abschließklappe 40 in Richtung zu ihrer in Fig. 2 dargestellten Freigabestellung verstellt werden, um somit das Abströmen der den Abgasnachbehandlungskanalbereich 16 verlassenden Abgase über den Abgasaustrittskanalbereich 36 zu ermöglichen. Da der Strömungsweg über den Abgasaustrittskanalbereich 36 einen deutlich geringeren Strömungswiderstand aufweist, als der Strömungsweg durch das Isolationsvolumen 20, wird bei Positionierung der Abschließklappe 40 in ihrer Freigabestellung im Wesentlichen der gesamte den Abgasnachbehandlungskanalbereich 16 verlassende Abgasstrom über den Abgasaustrittskanalbereich 36 in den Abgasableitkanalbereich 34 strömen. Auch dann, wenn nach ausreichender Erwärmung der Abgasnachbehandlungseinheiten das Isolationsvolumen 20 nicht von Abgas durchströmt wird, bildet dieses ein zu einer verbesserten thermischen Isolation der Abgasnachbehandlungseinheiten beitragendes Luftvolumen.

Tritt während eines Fahrbetriebs eines mit einer derartigen Abgasanlage 10 ausgestatteten Fahrzeugs ein Zustand auf, in welchem die Temperatur im Bereich einer oder mehrerer der Abgasnachbehandlungseinheiten auf einen Wert absinkt, bei welchem eine effiziente Durchführung der katalytischen Reaktion nicht mehr gewährleistet werden kann, beispielsweise bei länger andauerndem Betreiben einer Brennkraftmaschine in einem Niederlastzustand, kann die Abschließklappe 40 wieder in Richtung zu ihrer Abschließstellung verstellt werden, um dafür zu sorgen, dass zumindest ein Teil des den Abgasnachbehandlungskanalbereich 16 verlassenden Abgasstroms wieder durch das Isolationsvolumen 20 geleitet wird, um durch eine verbesserte thermischer Entkopplung der Abgasnachbehandlungseinheiten von der vergleichsweise kalten Umgebung eine weitere Abkühlung der Abgasnachbehandlungseinheiten zu vermeiden bzw. dafür zu sorgen, dass auch in diesem Betriebszustand die im Abgasnachbehandlungskanalbereich 16 angeordneten Abgasnachbehandlungseinheiten durch diese durchströmende Abgase auf einer für den Betrieb der Abgasnachbehandlungseinheiten erforderlichen Temperatur gehalten werden können.

Es sei abschließend darauf hingewiesen, dass selbstverständlich die Prinzipien der vorliegenden Erfindung auch bei einer baulich anders ausgestalteten Abgasanlage Anwendung finden können. So können beispielsweise die Kanalabschnitte 22, 24 einander fortsetzend, also nicht einander in der Abgashauptströmungsrichtung überlappend angeordnet sein. Auch die im Abgasnachbehandlungskanalbereich vorzusehenden Abgasnachbehandlungseinheiten können abhängig von der in Verbindung mit einer derartigen Abgasanlage zu betreibenden Brennkraftmaschine ausgewählt werden.

## Patentansprüche

1. Abgasanlage für eine Brennkraftmaschine, insbesondere Diesel-Brennkraftmaschine, umfassend einen Abgasströmungskanal (12), wobei in einem Abgasnachbehandlungskanalbereich (16) des Abgasströmungskanals (12) wenigstens eine Abgasnachbehandlungseinheit (23, 26, 28, 30) vorgesehen ist, wobei der Abgasnachbehandlungskanalbereich (16) des Abgasströmungskanals (12) wenigstens bereichsweise in einem von aus dem Abgasnachbehandlungskanalbereich (16) austretendem Abgas durchströmbaren Isolationsvolumen (20) verläuft, wobei der Abgasnachbehandlungskanalbereich (16) zu einem Abgaseintrittsbereich (32) des Isolationsvolumens (20) und einem Abgasaustrittskanalbereich (36) des Abgasströmungskanals (12) offen ist und der Abgasaustrittskanalbereich (36) zu einem Abgasableitkanalbereich (34) des Abgasströmungskanals (12) offen ist, und wobei in Zuordnung zu dem Abgasaustrittskanalbereich (36) eine zum Abschließen und Freigeben des Abgasaustrittkanalbereichs (36) verstellbare Abschließeinheit (38) vorgesehen ist, **dadurch gekennzeichnet, dass** das Isolationsvolumen (20) zu dem Abgasableitkanalbereich (34) des Abgasströmungskanals (12) offen ist, so dass Abgas nach dem Durchströmen des Isolationsvolumens (20) zum Abgasableitkanalbereich (34) hin aus dem Isolationsvolumen (20) austritt.

2. Abgasanlage noch Anspruch 1, **dadurch gekennzeichnet, dass** im Wesentlichen der ganze Abgasnachbehandlungskanalbereich (16) des Abgasströmungskanals (12) in dem Isolationsvolumen (20) verläuft.

3. Abgasanlage nach einem der vorangehenden Ansprüche, **dadurch gekennzeichnet, dass** die Abschließeinheit (38) eine im Abgasaustrittkanalbereich (36) zwischen einer diesen gegen Durchströmung im Wesentlichen abschließenden Abschließstellung und einer diesen zur Durchströmung freigebenden Freigabestellung verstellbar angeordnete Abschließklappe (40) umfasst.

4. Abgasanlage nach einem der vorangehenden Ansprüche, **dadurch gekennzeichnet, dass** im Abgasnachbehandlungskanalbereich (16) eine Oxidationskatalysatoranordnung (23) oder/und eine Partikelfilteranordnung (26) oder/und eine SCR-Katalysatoranordnung (28) oder/und eine Ammoniak-Sperrkatalysatoranordnung (30) vorgesehen ist.

5. Abgasanlage nach Anspruch 4, **dadurch gekennzeichnet, dass** die SCR-Katalysatoranordnung (28) stromabwärts der Oxidationskatalysatoranordnung (23) angeordnet ist, und dass stromabwärts der Oxidationskatalysatoranordnung (23) und stromaufwärts der SCR-Katalysatoranordnung (28) eine Reaktionsmitteleingabeanordnung (29) angeordnet ist.

6. Abgasanlage nach einem der vorangehenden Ansprüche, **dadurch gekennzeichnet, dass** in Zuordnung zu wenigstens einer Abgasnachbehandlungseinheit (23, 28) ein Temperatursensor (46, 48) vorgesehen ist.

7. Abgasanlage nach Anspruch 6, **dadurch gekennzeichnet, dass** in Zuordnung zu der Abschließeinheit (38) ein unter der Ansteuerung einer Ansteuereinheit (44) stehender Stellantrieb (42) vorgesehen ist, wobei die Ansteuereinheit (44) dazu ausgebildet ist, den Stellantrieb (42) beruhend auf dem Ausgangssignal wenigstens eines einer Abgasnachbehandlungseinheit (23, 28) zugeordneten Temperatursensors (46, 48) anzusteuern.

8. Abgasanlage nach einem der vorangehenden Ansprüche, **dadurch gekennzeichnet, dass** der Abgasnachbehandlungskanalbereich (16) des Abgasströmungskanals (12) einen ersten Kanalabschnitt (22), einen zweiten Kanalabschnitt (24) und einen den ersten Kanalabschnitt (22) mit dem zweiten Kanalabschnitt (24) verbindenden dritten Kanalabschnitt (27) umfasst, wobei im ersten Kanalabschnitt (22) und im zweiten Kanalabschnitt (24) jeweils wenigstens eine Abgasnachbehandlungseinheit (23, 26, 28, 30) vorgesehen ist und eine Abgashauptströmungsrichtung im ersten Kanalabschnitt (22) im Wesentlichen gleich gerichtet zu einer Abgashauptströmungsrichtung im zweiten Kanalabschnitt (24) ist und eine Abgashauptströmungsrichtung im dritten Kanalabschnitt (27) im Wesentlichen entgegengesetzt zur Abgashauptströmungsrichtung im ersten Kanalabschnitt (22) und im zweiten Kanalabschnitt (24) ist.

9. Abgasanlage nach Anspruch 8, **dadurch gekennzeichnet, dass** der erste Kanalabschnitt (22) und der zweite Kanalabschnitt (24) einander in der Abgashauptströmungsrichtung im ersten Kanalabschnitt (22) und im zweiten Kanalabschnitt (24) vorzugsweise im Wesentlichen vollständig überlappen.

## Claims

1. Exhaust system for an internal combustion engine, especially diesel internal combustion engine, comprising an exhaust gas flow duct (12), wherein at least one exhaust gas post-treatment unit (23, 26, 28, 30) is provided in an exhaust gas post-treatment duct area (16) of the exhaust gas flow duct (12), wherein the exhaust gas post-treatment duct area (16) of the exhaust gas flow duct (12) extends, in at least some areas, in an insulation volume (20), through which exhaust gas discharged from the exhaust gas post-treatment duct area (16) can flow, wherein the exhaust gas post-treatment duct area (16) is open towards an exhaust gas inlet area (32) of the insulation volume (20) and towards an exhaust gas discharge duct area (36) of the exhaust gas flow duct (12) and wherein the exhaust gas discharge duct area (36) is open towards an exhaust gas removal duct area (34) of the exhaust gas flow duct (12), and wherein a closing unit (38) adjustable for closing and releasing the exhaust gas discharge duct area (36) is provided in association with the exhaust gas discharge duct area (36), **characterized in that** the insulation volume (20) is open towards the exhaust gas removal duct area (34) of the exhaust gas flow duct (12), so that after flowing through the insulation volume (20) exhaust gas exits the insulation volume (20) towards the exhaust gas removal duct area (34).

2. Exhaust system in accordance with claim 1, **characterized in that** the entire exhaust gas post-treatment duct area (16) of the exhaust gas flow duct (12) extends essentially in the insulation volume (20).

3. Exhaust system in accordance with one of the above claims, **characterized in that** the closing unit (38) comprises a closing flap (40), which is arranged in the exhaust gas discharge duct area (36) adjustably between a closed position essentially closing this exhaust gas discharge duct area against flow and a released position releasing this exhaust gas discharge duct area for flow.

4. Exhaust system in accordance with one of the above claims, **characterized in that** an oxidation catalytic converter device (23) or/and a particle filter device (26) or/and an SCR catalytic converter device (28) or/and an ammonia slip catalyst (30) is provided in the exhaust gas post-treatment duct area (16).

5. Exhaust system in accordance with claim 4, **characterized in that** the SCR catalytic converter device (28) is arranged downstream of the oxidation catalytic converter device (23), and that a reactant injection device (29) is arranged downstream of the oxidation catalytic converter device (23) and upstream of the SCR catalytic converter device (28).

6. Exhaust system in accordance with one of the above claims, **characterized in that** a temperature sensor (46, 48) is provided in association with at least one exhaust gas post-treatment unit (23, 28).

7. Exhaust system in accordance with claim 6, **characterized in that** an actuating drive (42), which is actuated by an actuating unit (44), is provided in association with the closing unit (38), wherein the actuating unit (44) is configured to actuate the actuating device (42) based on the output signal of at least one temperature sensor (46, 48) associated with an exhaust gas post-treatment unit (23, 28).

8. Exhaust system in accordance with one of the above claims, **characterized in that** the exhaust gas post-treatment duct area (16) of the exhaust gas flow duct (12) comprises a first duct section (22), a second duct section (24) and a third duct section (27) connecting the first duct section (22) to the second duct section (24), wherein at least one exhaust gas post-treatment unit (23, 26, 28, 30) each is provided in the first duct section (22) and in the second duct section (24) and an exhaust gas main flow direction in the first duct section (22) is directed essentially in the same direction as an exhaust gas main flow direction in the second duct section (24) and an exhaust gas main flow direction in the third duct section (27) is directed essentially opposite the exhaust gas main flow direction in the first duct section (22) and in the second duct section (24).

9. Exhaust system in accordance with claim 8, **characterized in that** the first duct section (22) and the second duct section (24) preferably overlap each other essentially completely in the exhaust gas main flow direction in the first duct section (22) and in the second duct section (24).

## Revendications

1. Système d'échappement pour un moteur à combustion interne, en particulier pour un moteur diesel, comprenant un canal d'écoulement de gaz d'échappement (12) où au moins une unité de post-traitement de gaz d'échappement (23, 26, 28, 30) est prévue dans une région de canal de post-traitement de gaz d'échappement (16) du canal d'écoulement de gaz d'échappement (12), où la région de canal de post-traitement de gaz d'échappement (16) du canal d'écoulement de gaz d'échappement (12) s'étend, au moins dans quelques régions, dans un volume d'isolation (20) à travers duquel du gaz évacué de la région de canal de post-traitement de gaz d'échappement (16) peut passer, où la région de canal de post-traitement de gaz d'échappement (16) est ouverte dans le sens d'une région d'entrée de gaz d'échappement (32) du volume d'isolation (20) et dans le sens d'une région de canal d'évacuation de gaz d'échappement (36) du canal d'écoulement de gaz d'échappement (12) et où la région de canal de décharge de gaz d'échappement (36) est ouverte dans le sens d'une région de canal d'évacuation de gaz d'échappement (34) du canal d'écoulement de gaz d'échappement (12), et où une unité de fermeture (38) ajustable pour fermer et libérer la région de canal de décharge de gaz d'échappement (36) est prévue en association avec la région de canal de décharge de gaz d'échappement (36), **caractérisé en ce que** le volume d'isolation (20) est ouvert dans le sens de la région de canal d'évacuation de gaz d'échappement (34) du canal d'écoulement de gaz d'échappement (12), de sorte qu'après le passage par le volume d'isolation (20) du gaz d'échappement quitte le volume d'isolation (20) dans le sens de la région de canal d'évacuation de gaz d'échappement (34).

2. Système d'échappement selon la revendication 1, **caractérisé en ce que** l'entière région de canal de post-traitement de gaz d'échappement (16) du canal d'écoulement de gaz d'échappement (12) s'étend essentiellement dans le volume d'isolation (20).

3. Système d'échappement selon les revendications précédentes, **caractérisé en ce que** l'unité de fermeture (38) comprend un clapet de fermeture (40) arrangé dans la région de canal de décharge de gaz d'échappement (36) ajustable entre une position de fermeture fermant essentiellement cette région de canal d'évacuation de gaz d'échappement et une position de libération libérant cette région de canal d'évacuation de gaz d'échappement pour permettre l'écoulement.

4. Système d'échappement selon une des revendications précédentes, **caractérisé en ce qu'**un arrangement de catalyseur d'oxydation (23) ou/et un arrangement de filtre particulaire (26) ou/et un arrangement de catalyseur SCR (28) ou/et un arrangement de catalyseur de rejet d'ammoniac (30) est prévu dans la région de canal de post-traitement de gaz d'échappement (16).

5. Système d'échappement selon la revendication 4, **caractérisé en ce que** l'arrangement de catalyseur SCR (28) est arrangé en aval de l'arrangement de catalyseur d'oxydation (23), et **en ce qu'**un arrangement d'injection de réactif (29) est arrange en aval de l'arrangement de catalyseur d'oxydation (23) et en amont de l'arrangement de catalyseur SCR (28).

6. Système d'échappement selon une des revendications précédentes, **caractérisé en ce qu'**un capteur de température (46, 48) est prévu en association avec au moins une unité de post-traitement de gaz d'échappement (23, 28).

7. Système d'échappement selon la revendication 6, **caractérisé en ce qu'**un actionneur (42) actionné par une unité d'actionnement (44) est prévu en association avec l'unité de fermeture (38), où l'unité d'actionnement (44) est configurée pour actionner l'actionneur (42) sur la base du signal de sortie d'au moins un capteur de température (46, 48) associé à une unité de post-traitement de gaz d'échappement (23, 28).

8. Système d'échappement selon une des revendications précédentes, **caractérisé en ce que** la région de canal de post-traitement de gaz d'échappement (16) du canal d'écoulement de gaz d'échappement (12) comprend une première section de canal (22), une deuxième section de canal (24) et une troisième section de canal (27) connectant la première section de canal (22) à la deuxième section de canal (24), ou au moins une unité de post-traitement de gaz d'échappement (23, 26, 28, 30) respective est prévue dans la première section de canal (22) et dans la deuxième section de canal (24) et où une direction principale d'écoulement de gaz d'échappement dans la première section de canal (22) est dirigée essentiellement dans le même sens qu'une direction principale d'écoulement de gaz d'échappement dans la deuxième section de canal (24) et où une direction principale d'écoulement de gaz d'échappement dans la troisième section de canal (27) est dirigée essentiellement dans le sens opposé à la direction principale d'écoulement de gaz d'échappement dans la première section de canal (22) et dans la deuxième section de canal (24).

9. Système d'échappement selon la revendication 8, **caractérisé en ce que** la première section de canal (22) et la deuxième section de canal (24) se chevauchent mutuellement essentiellement entièrement dans la direction principale d'écoulement de gaz d'échappement dans la première section de canal (22) et dans la deuxième section de canal (24).
